# EUROPEAN PATENT APPLICATION

(11) **EP 1 375 119 A1**
(43) Date of publication of application: **02.01.2004**
(21) Application number: 03013352.4
(22) Date of filing: 16.06.2003
(51) Int. Cl.: B29D 31/51, A43B 13/04

(54) **Method for manufacturing a sole for shoes composed of a tread sole that comprises vulcanized rubber coupled to a polyurethane mid-sole, and compound used for the method**

(30) Priority: 26.06.2002 IT PD20020174
(71) Applicant: Main Group S.p.A., 35129 Padova (IT)
(72) Inventor: Lorenzin, Lorenzo, 35031 Abano Terme, (Prov. of Padova) (IT)
(74) Representative: Modiano, Guido, Dr.-Ing.

(57) **Abstract**

The method is characterized in that the mix provided for the vulcanizable rubber, combined with at least one reinforcing filler and at least one vulcanization accelerator, comprises a compound that contains at least one nitrile-based vulcanizable rubber and at least one acrylic resin. A metered quantity of the mix is introduced within a first cavity of a mold, whose bottom is constituted by a piston that is kept at a temperature between 100 and 200 °C, while in an upper region there is a dummy last, which is also kept at a temperature between 100 and 200 °C, the two temperatures being adjustable independently. Once the tread sole has been prepared in this regard, the sole bottom carried by the piston descends, forming an additional cavity into which the polyurethane is injection-molded. The vulcanized rubber can react further with the components of the polyurethane, producing great mutual adhesion of the two materials.

## Description

The present invention relates to a method for manufacturing a sole for shoes having a tread sole that comprises vulcanized rubber coupled to a polyurethane mid-sole.

The present invention also relates to a particular mix used for the vulcanizable rubber that is suitable to adhere to the polyurethane very safely.

The problems encountered in coupling vulcanized rubber and polyurethane are known from the background art.

The two materials, at least the ones used up to now, are substantially mutually incompatible, and in order to associate them, the vulcanized rubber must be cold-treated with a primer that makes it ready to receive the poured or injection-molded polyurethane.

This entails, in the manufacture of soles for shoes or of entire shoes, the need to provide tread soles made of vulcanized rubber that have a prepared surface and must then be placed inside the molds where the polyurethane will be injection-molded or poured.

Instead of treatment with a primer, other solutions have been adopted, which provide for the arrangement of a felt between the vulcanized rubber and the polyurethane, the felt having to be compatible with both materials.

With these problems, it is evident that the vulcanized rubber tread sole cannot be prepared in the same treatment cycle as the sole or shoe but must be prepared beforehand and separately, allowed to cool and then subjected to a surface treatment, or it is necessary to use an auxiliary component.

The manufacture of shoes with vulcanized rubber tread sole and polyurethane mid-sole is therefore scarcely convenient and excessively expensive.

On the other hand, the advantages of a sole with a vulcanized rubber tread sole and a remaining part (mid-sole) made of polyurethane would be considerable, because a vulcanized rubber tread sole is highly resistant to wear and thermal abrasion and a polyurethane mid-sole is very light and comfortable.

The aim of the present invention is to provide a method that allows to provide, in a same operating cycle, a sole that has a tread sole that comprises vulcanized rubber coupled to a polyurethane mid-sole.

Within this aim, an object of the invention is to provide a method that does not require idle times between the preparation of the tread sole comprising vulcanized rubber and the subsequent coupling to a polyurethane mid-sole formed within a mold.

Another object is to provide a method in which it is not necessary to treat the tread sole comprising vulcanized rubber before the injection-molding or pouring of the polyurethane into the mold.

Another object is to provide products that can be suitable for performing the method.

This aim and these and other objects that will become better apparent hereinafter are achieved by a method for manufacturing a sole for shoes that has a tread sole that comprises vulcanized rubber coupled to a polyurethane mid-sole, said method consisting in:
a) preparing, for the vulcanizable rubber, a mix which, combined with at least one reinforcing filler and at least one vulcanization accelerator, is characterized in that it comprises a compound that contains:
   a₁) at least one nitrile-based vulcanizable rubber;
   a₂) at least one acrylic resin.
b) introducing a metered quantity of said mix within a first cavity of a mold, which is formed by a pseudocylindrical side wall in which a sole bottom piston can move and is closed in an upper region by a first replaceable dummy last;
c) waiting for a vulcanization time, while keeping the sole bottom piston at a temperature of 100-200 °C and the dummy last at a temperature of 100-200 °C, said temperatures being adjustable independently;
d) moving the sole bottom with the tread sole in contact therewith, so as to generate a second cavity, and replacing the dummy last with a second dummy last or with a last with a fitted upper, closing it with the rings;
e) injecting or pouring into said second cavity a metered quantity of polyurethane;
f) waiting for the reaction time of the polyurethane, keeping the second dummy last and the rings at a temperature lower than 120 °C;
g) removing the sole and allowing it to rest for the stabilization time.

Advantageously, by keeping the rubber at 100-110 °C, for example by means of air jets provided with known means, before the injection or pouring of the polyurethane, the mutual bonding of the materials is facilitated.

The present invention also relates to the use of a vulcanizable rubber that is obtained with a mix which, combined with at least one reinforcing filler and at least one vulcanization accelerator, is characterized in that it comprises a compound that contains at least one vulcanizable nitrile-based rubber and at least one acrylic resin, in order to form a sole for shoes that is composed of a tread sole that comprises vulcanized rubber coupled to a polyurethane mid-sole.

Further characteristics and advantages of the invention will become better apparent from the following detailed description of a preferred embodiment of the method, illustrated also with the aid of the accompanying drawings, wherein:
Figure 1 is a schematic sectional view of the mold used;
Figure 2 is a more detailed, partly sectional, view of the structure of the mold and of its movement means, with the mold in the open position;
Figure 3 is a view of the assembly of Figure 2, with the mold closed in order to form the tread sole comprising vulcanized rubber;
Figure 4 is a view of the mold and of its closure means in the step of the method related to the injection of the polyurethane.

The method according to the invention provides for a first step in which a vulcanizable rubber is prepared which is obtained with a mix which, combined with at least one reinforcing filler and at least one vulcanization accelerator, is characterized in that it comprises a compounds that contains:
a₁) at least one vulcanizable nitrile-based rubber;
a₂) at least one acrylic resin.

The nitrile-based rubber that is used is conveniently of the medium-high nitrile type (substantially 30-38% nitrile in the polymer) with a low Mooney value (indicatively, a viscosity of 40-42 Mooney).

A rubber of this kind comprises for example a butadiene-acrylonitrile copolymer technically referenced as NBR.

The acrylic resin is hydroxylated, preferably with a hydroxyl lower than 2 in naphtha as solvent.

This resin is preferably used in a solvent and its percentage by weight does not exceed 6% of the overall weight of the mix.

A reinforcing filler of the siliceous type is also added to the mix in a per se known manner.

Said reinforcing filler is preferably precipitated amorphous silica or is a composition that contains 85 to 90% SiO₂ with a BET from 150 to 200 m²/g.

The reinforcing filler is present in a percentage by weight that is between 20 and 25% of the overall weight of the mix.

The vulcanization accelerator is for example of the mercaptan class, with the addition of an ultra-accelerator.

The accelerator is introduced in the mix in a per se known manner in a percentage by weight that is between 1 and 1.5% of the overall weight of the mix.

While continuing the description of the method, it is convenient to describe also the structure of the mold that is used, and this is done with reference to the accompanying drawings.

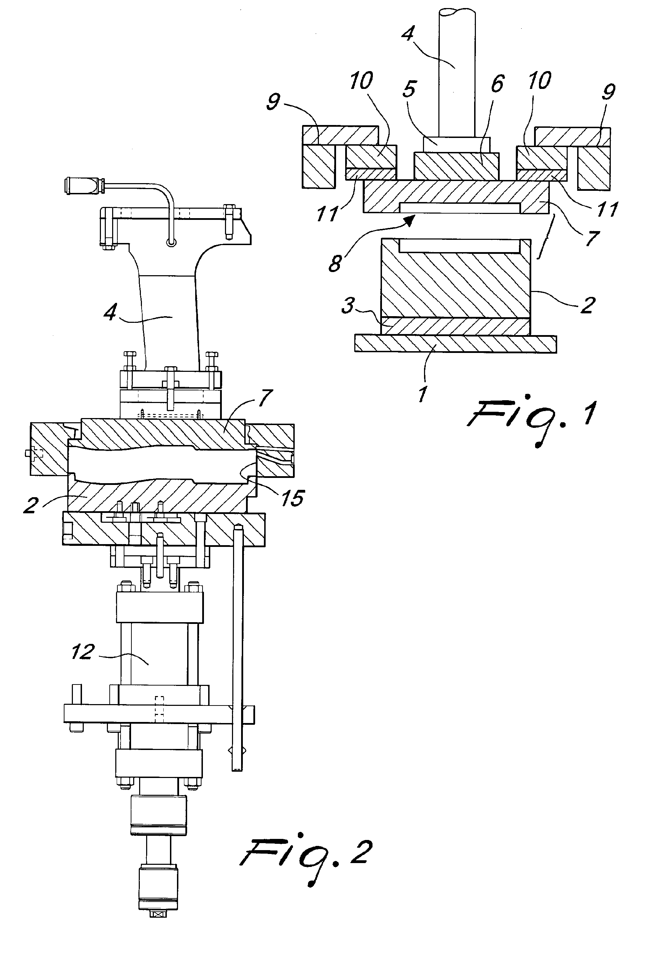

With reference to the drawings, Figure 1 illustrates schematically the mold that is used in the method according to the present invention.

The mold is composed of a carriage plate 1, on which the part 2 of a mold that will form the sole bottom or tread sole 17 of the vulcanized rubber sole is fixed.

The part 2 of the mold is fixed to the carriage plate 1 with the interposition of a heating plate 3.

A pivoted coupling arm 4 for rotating the last is visible in an upper region.

In the lower part of said arm there is an insulating plate 5, which with the interposition of a heating plate 6 supports a dummy last 7, which has a first cavity 8 that corresponds to the upper part of the tread sole that comprises vulcanized rubber.

Figure 1 again illustrates ring holders 9 and rings 10 of the mold that act on the dummy last 7 with the interposition of insulating means 11.

The combination of the heating plates and of the insulating means allows to adjust independently the upper and lower temperatures of the mold.

Figures 2, 3 and 4 show in greater detail the structure of the mold and its fixtures.

Figure 2 illustrates the assembly in the condition in which the mold is open, the mold being the one designed to produce the tread sole and being formed with a pseudocylindrical side wall 15 in which a sole bottom piston 12 may move.

This figure clearly shows the presence of the piston 12 that allows to move the lower part 2 of the mold.

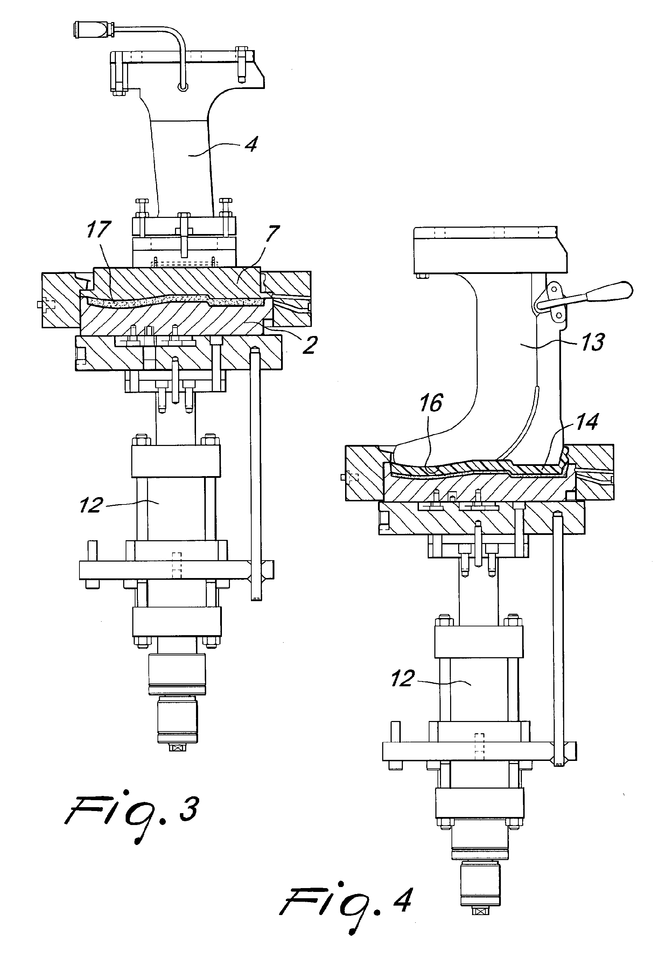

Figure 3 is a view of the same assembly of Figure 2 in the condition in which the mold is closed, when a tread sole, designated by the reference numeral 13, is formed.

In Figure 4, the dummy last 7 is replaced with a second dummy last or a last with a fitted upper 13 and the same figure also illustrates the step for injecting and molding a polyurethane mid-sole 14 in a second cavity 16 formed by moving the sole bottom piston 12 with the tread sole 17 in contact therewith.

As can be noted, the preparation of the tread sole comprising vulcanized rubber and the subsequent operation for coupling with the polyurethane mid-sole occur in the same machine and with an operating cycle in which the two steps occur one after the other.

As regards the reasons for the coupling between the vulcanized rubber and the polyurethane, they reside in the use of a compound that contains acrylic resin.

Said resin, at the end of the vulcanization step on the part of the sole where the polyurethane will be deposited, can react with the components of the polyurethane, producing an intimate and strong coupling.

It is important to leave the parts of the mold not perfectly or completely closed, so that, what is known as engineered flash, is formed.

This allows the optimum manufacture of the tread sole comprising vulcanized rubber and of the polyurethane mid-sole.

From what has been described and illustrated, it can be noted that the proposed aim and objects have all been achieved and in particular that a method has been devised which allows to provide a tread sole that comprises vulcanized rubber coupled to a polyurethane mid-sole, and that the entire operation occurs with a succession of steps that can be performed in a single machine and sequentially.

Equivalent components and equivalent mold structures can of course be used starting from the same inventive concept as defined in the appended claims.

The disclosures in Italian Patent Application No. PD2002A000174 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for manufacturing a sole for shoes having a tread sole that comprises vulcanized rubber coupled to a polyurethane mid-sole, said method consisting in:
a) preparing, for the vulcanizable rubber, a mix which, combined with at least one reinforcing filler and at least one vulcanization accelerator, is **characterized in that** it comprises a compound that contains:
a₁) at least one nitrile-based vulcanizable rubber;
a₂) at least one acrylic resin.
b) introducing a metered quantity of said mix within a first cavity (8) of a mold (2), which is formed by a pseudocylindrical side wall (15) in which a sole bottom piston (12) can move and is closed in an upper region by a first replaceable dummy last (7);
c) waiting for a vulcanization time, while keeping the sole bottom piston (12) at a temperature of 100-200 °C and the dummy last (7) at a temperature of 100-200 °C, said temperatures being adjustable independently;
d) moving the sole bottom piston (12) with the tread sole (17) in contact therewith, so as to generate a second cavity (16), and replacing the dummy last (7) with a second dummy last or a last (13) with a fitted upper, closing it with the mold rings (10);
e) injecting or pouring into said second cavity (16) a metered quantity of polyurethane;
f) waiting for the reaction time of the polyurethane, keeping the second dummy last (13) and the rings (10) at a temperature lower than 120 °C;
g) removing the sole and allowing it to rest for the stabilization time.

2. The method according to claim 1, **characterized in that** the rubber is kept at 100-110 °C before injecting or pouring the polyurethane.

3. The method according to claim 2, **characterized in that** it keeps the rubber at 100-110 °C by means of air jets.

4. The method according to claim 1, **characterized in that** said nitrile rubber is of the medium-high nitrile type.

5. The method according to claims 1 and 4, **characterized in that** said nitrile rubber preferably has a low Mooney value (low viscosity).

6. The method according to claim 4, **characterized in that** said nitrile rubber comprises a butadiene-acrylonitrile copolymer commonly known as NBR.

7. The method according to claim 1, **characterized in that** said acrylic resin is hydroxylated.

8. The method according to claim 7, **characterized in that** the hydroxyl is less than 2.

9. The method according to claims 7 and 8, **characterized in that** said resin is provided in a naphtha solvent.

10. The method according to claim 1, **characterized in that** said acrylic resin is present in a percentage by weight of no more than 6% of the overall weight of the mix.

11. The use of a vulcanizable rubber obtained with a mix which, combined with at least one reinforcing filler and at least one vulcanization accelerator, is **characterized in that** it comprises a compound that contains at least one vulcanizable nitrile-based rubber and at least one acrylic resin for providing a sole for shoes that is composed of a tread sole that comprises vulcanized rubber coupled to a polyurethane mid-sole.

12. The use of a rubber according to claim 11, **characterized in that** it employs a vulcanizable nitrile rubber (NBR) of the medium-high nitrile type.

13. The use of a rubber according to claim 11, **characterized in that** it uses, as a nitrile rubber, a butadiene-acrylonitrile copolymer commonly known as NBR.

14. The use of a rubber according to claim 11, **characterized in that** said acrylic resin is hydroxylated.

15. The use of a rubber according to claim 14, **characterized in that** the hydroxyl is less than 2.

16. The use of a rubber according to claims 14 and 15, **characterized in that** said resin is provided in a naphtha solvent.
